# EUROPEAN PATENT APPLICATION

(11) **EP 4 667 442 A1**
(43) Date of publication of application: **24.12.2025**
(21) Application number: 25183849.6
(22) Date of filing: 18.06.2025
(51) Int. Cl.: C04B 35/626, C04B 35/632, C04B 35/636, C04B 35/65, C04B 35/653, C04B 35/80

(54) **SLURRY INFILTRATION WITH FREEZE DRYING AND GELLING FOR MORE UNIFORM DISTRIBUTION OF PARTICULATE MATERIAL**

(30) Priority: 19.06.2024 US 202418748021
(71) Applicant: RTX Corporation, Farmington, CT 06032 (US)
(72) Inventor: MASTROBATTISTO, Daniel, Aliso Viejo, 92656 (US); HEJAZI, Vahid, Carlsbad, 92009 (US)
(74) Representative: Dehns

(57) **Abstract**

A method for uniformly distributing particulate matter in a fiber reinforcement of a CMC material, comprising: providing at least one preform of at least one fiber reinforcement; infiltrating the preform with at least one slurry containing at least one particulate material and at least one solvent to form at least one slurry infiltrated preform comprising the particulate material; freezing the slurry infiltrated preform containing the particulate material to form at least one frozen slurry infiltrated preform containing the particulate material; sublimating the frozen slurry infiltrated preform including the particulate material to form at least one structural support comprising the particulate material uniformly distributed thereupon within at least one sublimated slurry infiltrated preform; and melt-infiltrating with at least one metal, at least one metalloid, at least one metal alloy, or at least one metalloid alloy, the sublimated slurry infiltrated preform containing the structural support to form a melt-infiltrated CMC material.

## Description

### FIELD OF THE INVENTION

The subject matter disclosed herein relates to methods for distributing material in a ceramic matrix composite (CMC) and, in particular, uniformly distributing material within a CMC.

### BACKGROUND OF THE INVENTION

Typical slurries for CMC infiltration contain solvents and/or binders that convert to a liquid when heated during drying and/or dehydration. When the solvents and/or binders convert to a liquid, the resultant liquid can wick along the surface of the fibers in the fiber reinforcement, can wet the surface of pores of the fiber reinforcement, and/or can attempt to move via capillary action to the surface of the fiber reinforcement. The liquid solvent and/binder can carry particles of an infiltrant material, e.g., a particulate material, to the surfaces of large pores of the fiber reinforcement. In addition, the infiltrant material can also clog small pores of the fiber reinforcement. Moreover, the infiltrant material itself can even lead to its own uneven distribution throughout the fiber reinforcement. Upon solvent evaporation, the non-uniformly distributed infiltrant material can become tightly packed in certain areas, while being absent from other areas. As a result, a uniform controlled distribution of infiltrant material can be difficult to achieve or cannot even be achieved.

### SUMMARY OF THE INVENTION

In general, the present disclosure relates to methods for uniformly distributing particulate material. In particular, the present disclosure relates to methods for uniformly distributing particulate material using a freeze-drying and gelling technique.

According to an embodiment of the present disclosure, there is provided a method for uniformly distributing particulate matter in a fiber reinforcement of a ceramic matrix composite material, comprising:
providing at least one preform of at least one fiber reinforcement;
infiltrating the preform with at least one slurry comprising at least one particulate material and at least one solvent to form at least one slurry infiltrated preform comprising at least one particulate material;
freezing the slurry infiltrated preform comprising the particulate material to form at least one frozen slurry infiltrated preform comprising the particulate material;
sublimating the frozen slurry infiltrated preform comprising the particulate material to form at least one structural support comprising the particulate material uniformly distributed thereupon within at least one sublimated slurry infiltrated preform; and
melt-infiltrating with at least one metal, at least one metalloid, at least one metal alloy, or at least one metalloid alloy, the sublimated slurry infiltrated preform comprising the structural support to form at least one melt-infiltrated CMC material.

According to another embodiment of the present disclosure, there is a gas turbine engine component comprising a melt-infiltrated CMC material fabricated according to the above method, comprising the steps of:
providing at least one preform of at least one fiber reinforcement;
infiltrating the preform with at least one slurry comprising at least one particulate material and at least one solvent to form at least one slurry infiltrated preform comprising at least one particulate material;
freezing the slurry infiltrated preform comprising the particulate material to form at least one frozen slurry infiltrated preform comprising the particulate material;
sublimating the frozen slurry infiltrated preform comprising the particulate material to form at least one structural support comprising the particulate material uniformly distributed thereupon within at least one sublimated slurry infiltrated preform;
melt-infiltrating with at least one metal, at least one metalloid, at least one metal alloy, or at least one metalloid alloy, the sublimated slurry infiltrated preform comprising the structural support to form at least one melt-infiltrated CMC material; and
forming at least one gas turbine engine component comprising the melt-infiltrated CMC material.

According to yet another embodiment of the present disclosure, there is provided a melt-infiltrated CMC material fabricated according to the above method, comprising the steps of:
providing at least one preform of at least one fiber reinforcement;
infiltrating the preform with at least one slurry comprising at least one particulate material and at least one solvent to form at least one slurry infiltrated preform comprising at least one particulate material;
freezing the slurry infiltrated preform comprising the particulate material to form at least one frozen slurry infiltrated preform comprising the particulate material;
sublimating the frozen slurry infiltrated preform comprising the particulate material to form at least one structural support comprising the particulate material uniformly distributed thereupon within at least one sublimated slurry infiltrated preform; and
melt-infiltrating with at least one metal, at least one metalloid, at least one metal alloy, or at least one metalloid alloy, the sublimated slurry infiltrated preform comprising the structural support to form at least one melt-infiltrated CMC material.

In further embodiments of the present disclosure, including further embodiments of the above exemplary embodiments, the slurry further comprises at least one binder.

In further embodiments of the present disclosure, including further embodiments of the above exemplary embodiments, the comprises at least one gel binder, and the gel binder comprises any one or more of the following gel binder materials: methyl cellulose, carbo-ethyl cellulose, hydroxypropyl methyl cellulose, gellan gum, gelatin, pectin, aragose gum, konjac gum, carrageenan gum, alginate, sodium alginate, agar gum, non-ionic copolymer surfactant.

In further embodiments of the present disclosure, including further embodiments of the above exemplary embodiments, the particulate material comprises any one or more of the following materials: carbon source materials, nitride source materials, boride source materials, oxide source materials, metal source materials and metalloid source materials.

In further embodiments of the present disclosure, including further embodiments of the above exemplary embodiments, the carbon source materials comprise any one or more of the following: carbon-based materials, carbide materials, graphite, carbon nanotube, carbon nanofiber, and diamond.

In further embodiments of the present disclosure, including further embodiments of the above exemplary embodiments, the carbide materials comprise any one or more of the following: boron carbides, zirconium carbides, hafnium carbides, tantalum carbides, niobium carbides, titanium carbides, molybdenum carbides, tungsten carbides, vanadium carbides, chromium carbides, ytterbium carbides, and yttrium carbides.

In further embodiments of the present disclosure, including further embodiments of the above exemplary embodiments, the nitride source materials comprise any one or more of the following: silicon nitrides, titanium nitrides, boron nitrides, zirconium nitrides, hafnium nitrides, niobium nitrides, tantalum nitrides, vanadium nitrides, ytterbium nitrides, and yttrium nitrides.

In further embodiments of the present disclosure, including further embodiments of the above exemplary embodiments, the boride source materials comprise any one or more of the following: silicon borides, titanium borides, zirconium borides, hafnium borides, niobium borides, tantalum borides, vanadium borides, ytterbium borides, and yttrium borides.

In further embodiments of the present disclosure, including further embodiments of the above exemplary embodiments, the oxide source materials comprise any one or more of the following: aluminum oxides, silicon oxides, tantalum oxides, boron oxides, hafnium oxides, zirconium oxides, ytterbium oxides, and yttrium oxides.

In further embodiments of the present disclosure, including further embodiments of the above exemplary embodiments, prior to the step of melt-infiltrating, further comprising disposing at least one layer of a protective material around and in contact with at least one fiber of the preform of the fiber reinforcement to form at least one fiber protective material layer thereupon.

In further embodiments of the present disclosure, including further embodiments of the above exemplary embodiments, the step of disposing comprises any one or more of the following techniques: slurry infiltration and chemical vapor infiltration.

In further embodiments of the present disclosure, including further embodiments of the above exemplary embodiments, the fiber protective material layer comprises any one or more of the following: carbide source material, nitride source material, and boride source material.

In further embodiments of the present disclosure, including further embodiments of the above exemplary embodiments, the carbide source material comprises any one or more of the following: boron carbides, zirconium carbides, hafnium carbides, tantalum carbides, niobium carbides, titanium carbides, molybdenum carbides, tungsten carbides, vanadium carbides, chromium carbides, ytterbium carbides, and yttrium carbides.

In further embodiments of the present disclosure, including further embodiments of the above exemplary embodiments, the nitride source materials comprise any one or more of the following: silicon nitrides, titanium nitrides, boron nitrides, zirconium nitrides, hafnium nitrides, niobium nitrides, tantalum nitrides, vanadium nitrides, ytterbium nitrides, and yttrium nitrides.

In further embodiments of the present disclosure, including further embodiments of the above exemplary embodiments, the boride source materials comprise any one or more of the following: silicon borides, titanium borides, zirconium borides, hafnium borides, niobium borides, tantalum borides, vanadium borides, ytterbium borides, and yttrium borides.

In further embodiments of the present disclosure, including further embodiments of the above exemplary embodiments, the structural support comprises a foam-like material.

In further embodiments of the present disclosure, including further embodiments of the above exemplary embodiments, the metalloid comprises silicon, the metalloid alloy comprises a silicon-containing alloy, and the melt-infiltration step further comprises forming a reaction product comprising at least one uniformly distributed particulate material comprising any one or more of the following: carbides, silicides, nitrides, borides and residual free silicon.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 illustrates an uneven carbon source distribution that may occur during a standard drying procedure of a CMC material during production.
FIG. 2 shows a type of choking off of an infiltration path due to uneven packing of a carbon source material in a CMC material during the production thereof.
FIG. 3 shows an exemplary even distribution of a carbon source in a CMC material during production when freeze drying with gelling.
FIG. 4 illustrates the exemplary final distribution of a carbon source that has reacted with Si to form a final CMC material.
FIG. 5 is a flowchart illustrating an exemplary method for uniformly distributing a material within a CMC.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

The present disclosure is directed to methods for preparing CMC materials that avoid the shortcomings of the prior art in that they provide a more uniform and/or more consistently uniform CMC material.

To combat the above-discussed effects of typical binders on particulate material distribution, certain types of binders have been found suitable that do not convert or revert to a liquid state when heated. Such binders may be chosen from thermally activated gels. These thermally activated gels have been found to improve the particulate material distribution throughout the ceramic matrix composite material.

However, such thermally activated gels may under certain circumstances shrink during dehydration and/or pyrolysis, which again can lead to unwanted particle packing, e.g., at certain locations within the ceramic matrix composite material. For instance, the particulate material may be more densely packed at certain locations than at other locations, thus the gels may crack. When cracking occurs, areas of uneven distribution of the particulate material may form, e.g., along the interface of a crack formed in the gel.

During a CMC production process, a particulate material, e.g., carbon, may be added to a fiber reinforcement, which reacts with a metal; metalloid, e.g., silicon, boron, combinations comprising any one of the foregoing, and the like; metal alloy; or metalloid alloy, e.g., silicon alloy, combinations comprising the foregoing, and the like; present therein during melt infiltration and form metalloid carbide(s), e.g., silicon carbide, boron carbide, combinations comprising any one of the foregoing, and the like; transition metal carbide(s), e.g., zirconium carbide, hafnium carbide; combinations comprising any one of the foregoing, and the like. The aforementioned carbon present may be added to the fiber reinforcement through a slurry infiltration process. Suitable carbon source material is carbon dense and mechanically stable during mixing. The carbon source, like all the particulate material being added, also needs to be uniformly distributed within the matrix. During melt infiltration with a metalloid or metalloid alloy, e.g., silicon or silicon alloys, C reacts with Si and/or alloying elements, e.g., Hf, Zr, B, combinations comprising at least one of the foregoing, and the like; and converts to SiC, metalloid carbide(s), metal carbide(s), combinations comprising any one of the foregoing, and the like. The resulting SiC, metalloid carbide(s) and metal carbide(s) particles have a larger volume than the original carbon particle present. If any of the particulate materials are packed too tightly, that is, a non-uniform particle distribution, the resulting volume expansion can block off the infiltration path to certain parts of the fiber reinforcement. Such blocking can lead to an inferior or defective resultant CMC material. In addition, during conventional drying of the slurry, particulate material may also clump together tightly, that is, a non-uniform particle distribution, which again can lead to an inferior or defective resultant CMC material. The non-uniform particle distribution, e.g., carbides, silicides, nitrides, residual free silicon, combinations comprising any one of the foregoing, and the like, can result in high internal stresses due to a coefficient of thermal expansion (CTE) mismatch between the aforementioned materials. The non-uniformly distributed materials can also lead to other properties to be non-uniform throughout the CMC material, e.g., thermal conductivity, of the resultant CMC material will become non-uniform too throughout the resultant CMC material and again lead to an inferior or defective resultant CMC material. These inferior or defective results drive a need to find ways to achieve uniform particle distribution.

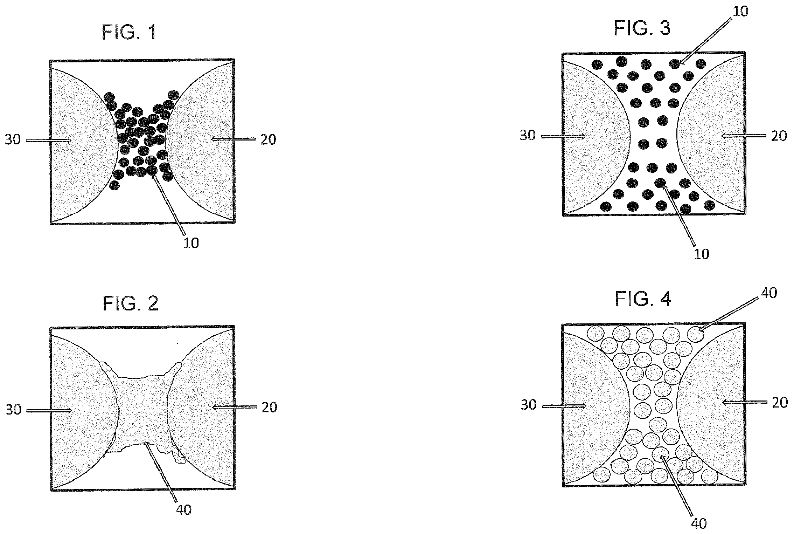

Fig. 1 illustrates the potential effect of a standard drying procedure on the distribution of particulate material, e.g., a carbon source, in a CMC. The black dots 10 can represent diamond particles. However, any particles that are desired to be distributed in the fiber reinforcement can be represented by the black dots 10, e.g., carbide or metal particles that may be desired to be present in the CMC material. As can be seen, the black dots 10 designating the particulate material, e.g., carbon source, can clog up a path between two fibers 20, 30 by non-uniformly distributing within the space around the fibers (See Fig. 1).

Fig. 2 illustrates the effect of proceeding with the production of a CMC material from a situation depicted in Fig. 1, e.g., when the black dots 10 represent a carbon source such as diamonds. When Si is infiltrated into the fiber reinforcement containing the carbon source particles, the carbon to SiC reaction is highly volume expansive, e.g., approximately 1.1 to at least approximately 2.0 volume expansion from carbon to SiC 40 may be expectable, which can "choke" off infiltration paths if the carbon source is not distributed uniformly or is packed too tightly at certain locations within the preform.

Freeze drying and/or gelling binders have been found to produce uniformly distributed particles that avoid such choking off occurrences as illustrated in Fig. 2.

Freeze drying can be used to prevent unwanted particle packing. For example, if solvent removal takes place when the binder/solvent solution is in a liquid or other low mechanical strength phase, e.g., a soft gel, shrinking of the matrix material may occur. Shrinking can lead to unwanted dense uneven particulate material packing and, as a result, cracking can occur. In contrast, if solvent removal takes place when the binder/solvent solution is frozen, i.e., a solid phase, the matrix material will not shrink or crack because the remaining solid phase present provides structural support. This structural support prevents collapse of the matrix material, and, in turn, non-uniform particulate material distribution, during solvent removal. As a result, this structural support facilitates a controlled uniform particle distribution that can be maintained until a CMC is produced.

A further way to achieve more uniform particulate material distribution may be made by minimizing ice crystal size to the extent the resultant ice crystals are smaller than the size of the particulate material within the CMC. During freezing, large ice crystals can move particles to ice crystal grain boundaries. Particle movement causes unwanted particle packing, i.e., non-uniform particulate material distribution, at such grain boundaries, and achieves lower particle concentration at areas from where particles have been moved by the large ice crystals.

However, ice crystal size may be suppressed when gelling the slurry prior to freezing. If the gel achieves sufficient strength, ice crystals significantly smaller than the size of the particulate material(s) can form. As a result, the particulate material(s) are uniformly distributed.

Fig. 3 illustrates the significantly more even distribution of particulate material in the fiber reinforcement, for example, of diamond particles when freeze drying and a gelling binder is used. As can be seen, the particulate material represented by black dots 10 is uniformly distributed in the space between two fibers 20, 30 of the fiber reinforcement.

Referring now to Figure 6, an exemplary process 100 for uniformly distributing material with CMC materials is shown. At an exemplary step 200, a preform of a fiber reinforcement may be provided. Next, an at an exemplary step 300, particulate material, e.g., any one or more of the materials disclosed herein, may be infiltrated into the preform using a slurry. Suitable slurry techniques may include, but are not limited to, any technique capable of infiltrating a slurry, and its contents, within and throughout the entirety of the preform. Next, at an exemplary step 400, the preform may be frozen using a freeze-drying technique. Suitable freeze-drying techniques may include, but are not limited to, any technique capable of freezing the slurry, and its constituents, within and throughout the entirety of the preform. Next, at an exemplary step 500, the solvent of the frozen slurry infiltrated preform may be sublimated. Suitable sublimation techniques may include, but are not limited to, any technique capable of converting the solvent of the frozen slurry from a solid phase to a gaseous phase.

It has been discovered that when the preform containing a binder is freeze dried, the binder forms a "foam-like" material. The resulting foam-like material separates and suspends the particulate material therein such that the distribution of the particulate material becomes significantly more uniform than if drying, e.g., using heat. When using heat, the evaporating solvent, for example, may lead to shrinking of the slurry such that the particulate material may become clumped together. By using a freeze-drying technique, the foam-like support structure within the infiltrated fiber preform may be controlled, thereby also controlling the spacing and distribution of the particulate material within the foam and, in turn, within the fiber preform too.

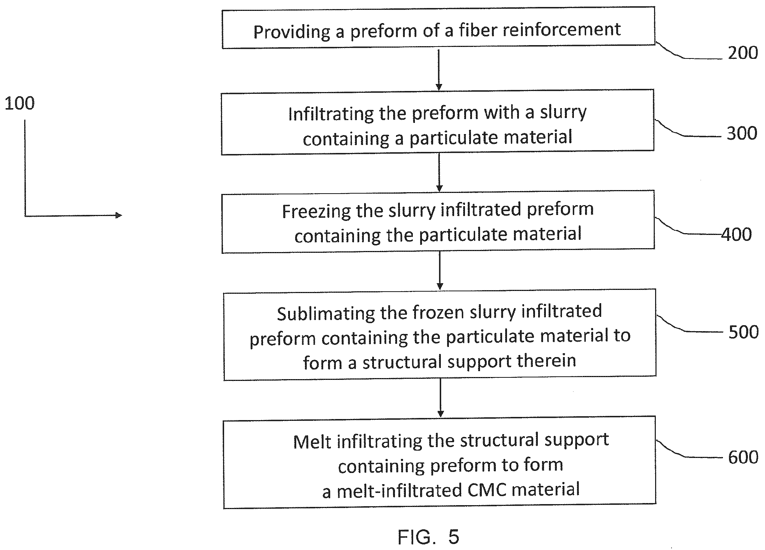

Referring again to Fig. 5, at an exemplary step 600, a liquid metalloid or metalloid alloy, for example, silicon or a silicon alloy, may be infiltrated into the fiber preform containing the particulate material suspended and uniformly distributed in the foam-like material. The pores between the fibers should contain uniformly distributed particulate material, which are not clumped together, and thereby allowing the pores to be adequately open for the, e.g., liquid metal, metalloid, metal alloy or metalloid alloy, to infiltrate uniformly between the fibers of the preform and around the particulate material. Moreover, open spaces that do not contain particulate materials should be also minimized by the even distribution of particulate material to avoid open porosity in the final CMC material. The reaction of diamond particles with, e.g., the liquid metalloid or metalloid alloy, such as silicon or a silicon alloy, leads to the formation of SiC.

Fig. 4 illustrates a CMC that has been formed from a process where the slurry containing the particulate material has been freeze dried and/or in which a gel binder has been used, each leading to the more even distribution of the particulate material in the fiber preform, and thereby leading to a CMC where the carbon source particles form SiC 40 that is uniformly distributed between the fibers 20, 30 of the preform, where open space between the SiC formed from the particulate material may be filled with silicide.

Typically, carbon sources suitable for use in CMCs have been found to be diamonds. Diamond have unmatched mechanically stability and carbon density, which makes them a highly suitable source of carbon for use in CMCs. However, the exemplary method disclosed herein expands the potential carbon sources suitable for use in CMCs beyond diamonds alone. Suitable carbon source materials may include, but are not limited to, carbon-based; various carbides, including but not limited to, boron carbides, zirconium carbides, hafnium carbides, tantalum carbides, niobium carbides, titanium carbides, molybdenum carbides, tungsten carbides, vanadium carbides, chromium carbides, ytterbium carbides, yttrium carbides, combinations comprising any one of the foregoing, and the like; graphite, e.g., flake, particle or fiber forms; carbon nanotubes, carbon nanofibers, diamond particles, combinations comprising any one of the foregoing, and the like.

Slurry additives, e.g., dispersant, wetting agent, pH adjustors, and the like, may be used to enhance the properties of the slurry. Additives of any shape, e.g., particulate, flake or fiber; or size, e.g., nanometer, sub-micron, micron, combinations comprising any one of the foregoing, and the like; may be added to a slurry, e.g., binder, solvent, combinations comprising any one of the foregoing, and the like; prior to slurry infiltration taking place. The additives may include, but are not limited to, carbon-based materials; various carbides, including but not limited to, boron carbides, zirconium carbides, hafnium carbides, tantalum carbides, niobium carbides, titanium carbides, molybdenum carbides, tungsten carbides, vanadium carbides, chromium carbides, ytterbium carbides, yttrium carbides, combinations comprising any one of the foregoing, and the like; period graphite, e.g., flake, particle or fiber forms; carbon nanotubes, carbon nanofibers, diamond particles, combinations comprising any one of the foregoing, and the like; nitrides, including but not limited to, silicon nitrides, titanium nitrides, boron nitrides, zirconium nitrides, hafnium nitrides, niobium nitrides, tantalum nitrides, vanadium nitrides, ytterbium nitrides, yttrium nitrides, combinations comprising any one of the foregoing, and the like; borides, including but not limited to, silicon borides, titanium borides, zirconium borides, hafnium borides, niobium borides, tantalum borides, vanadium borides, ytterbium borides, yttrium borides, combinations comprising any one of the foregoing, and the like; or oxides, including but not limited to, aluminum oxides, silicon oxides, tantalum oxides, boron oxides, hafnium oxides, zirconium oxides, ytterbium oxides, yttrium oxides, combinations comprising any one of the foregoing, and the like; metal(s) and metalloid(s), including but not limited to, silicon, boron, zirconium, hafnium, tantalum, niobium, titanium, molybdenum, tungsten, vanadium, chromium, ytterbium, yttrium; alloys comprising any one or more of the aforementioned metal(s) and/or metalloid(s), combinations comprising any one of the foregoing, and the like.

Suitable gel binders may include, but are not limited to, methyl cellulose, carbo-ethyl cellulose, hydroxypropyl methyl cellulose, gellan gum, gelatin, pectin, aragose gum, konjac gum, carrageenan gum, alginate, sodium alginate, agar gum, non-ionic copolymer surfactant, e.g., Pluronic^{®} F-127, commercially available from Sigma-Aldrich, Inc., St. Louis, Missouri; combinations comprising any one of the foregoing, and the like.

Fiber protection layers may contain fiber protection materials and be additionally applied on top of fibers pre-slurry infiltration to prevent rapid reaction of silicon carbide fibers with for example, silicon alloys, during melt infiltration. The fiber protection layer may be applied using CVI or through slurries. Suitable fiber protective materials may include, but not limited to, various carbides, including but not limited to, boron carbides, zirconium carbides, hafnium carbides, tantalum carbides, niobium carbides, titanium carbides, molybdenum carbides, tungsten carbides, vanadium carbides, chromium carbides, ytterbium carbides, yttrium carbides, combinations comprising any one of the foregoing, and the like; nitrides, including but not limited to, silicon nitrides, titanium nitrides, boron nitrides, zirconium nitrides, hafnium nitrides, niobium nitrides, tantalum nitrides, vanadium nitrides, ytterbium nitrides, yttrium nitrides, combinations comprising any one of the foregoing, and the like; or borides, including but not limited to, silicon borides, titanium borides, zirconium borides, hafnium borides, niobium borides, tantalum borides, vanadium borides, ytterbium borides, yttrium borides, combinations comprising any one of the foregoing, and the like.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present disclosure.

## Claims

1. A method for uniformly distributing particulate matter in a fiber reinforcement of a ceramic matrix composite material, comprising:
providing at least one preform of at least one fiber reinforcement;
infiltrating the at least one preform with at least one slurry comprising at least one particulate material and at least one solvent to form at least one slurry infiltrated preform comprising at least one particulate material;
freezing the at least one slurry infiltrated preform comprising the at least one particulate material to form at least one frozen slurry infiltrated preform comprising the at least one particulate material;
sublimating the at least one frozen slurry infiltrated preform comprising the at least one particulate material to form at least one structural support comprising the at least one particulate material uniformly distributed thereupon within at least one sublimated slurry infiltrated preform; and
melt-infiltrating with at least one metal, at least one metalloid, at least one metal alloy, or at least one metalloid alloy, the at least one sublimated slurry infiltrated preform comprising the at least one structural support to form at least one melt-infiltrated CMC material.

2. The method of claim 1, wherein the at least one slurry further comprises at least one binder.

3. The method of claim 2, wherein the at least one binder comprises at least one gel binder, and the at least one gel binder comprises any one or more of the following gel binder materials: methyl cellulose, carbo-ethyl cellulose, hydroxypropyl methyl cellulose, gellan gum, gelatin, pectin, aragose gum, konjac gum, carrageenan gum, alginate, sodium alginate, agar gum, non-ionic copolymer surfactant.

4. The method of claim 1, 2 or 3, wherein the at least one particulate material comprises any one or more of the following materials: carbon source materials, nitride source materials, boride source materials, oxide source materials, metal source materials and metalloid source materials.

5. The method of claim 4, wherein the carbon source materials comprise any one or more of the following: carbon-based materials, carbide materials, graphite, carbon nanotube, carbon nanofiber, and diamond,
wherein, optionally, the carbide materials comprise any one or more of the following: boron carbides, zirconium carbides, hafnium carbides, tantalum carbides, niobium carbides, titanium carbides, molybdenum carbides, tungsten carbides, vanadium carbides, chromium carbides, ytterbium carbides, and yttrium carbides.

6. The method of claim 4 or 5, wherein:
the nitride source materials comprise any one or more of the following: silicon nitrides, titanium nitrides, boron nitrides, zirconium nitrides, hafnium nitrides, niobium nitrides, tantalum nitrides, vanadium nitrides, ytterbium nitrides, and yttrium nitrides; and/or
the boride source materials comprise any one or more of the following: silicon borides, titanium borides, zirconium borides, hafnium borides, niobium borides, tantalum borides, vanadium borides, ytterbium borides, and yttrium borides.

7. The method of claim 4, 5 or 6, wherein the oxide source materials comprise any one or more of the following: aluminum oxides, silicon oxides, tantalum oxides, boron oxides, hafnium oxides, zirconium oxides, ytterbium oxides, and yttrium oxides.

8. The method of any preceding claim, prior to the step of melt-infiltrating, further comprising disposing at least one layer of a protective material around and in contact with at least one fiber of the at least one preform of the at least one fiber reinforcement to form at least one fiber protective material layer thereupon.

9. The method of claim 8, wherein the step of disposing comprises any one or more of the following techniques: slurry infiltration and chemical vapor infiltration.

10. The method of claim 8 or 9, wherein the at least one fiber protective material layer comprises any one or more of the following: carbide source material, nitride source material, and boride source material.

11. The method of claim 10, wherein:
the carbide source material comprises any one or more of the following: boron carbides, zirconium carbides, hafnium carbides, tantalum carbides, niobium carbides, titanium carbides, molybdenum carbides, tungsten carbides, vanadium carbides, chromium carbides, ytterbium carbides, and yttrium carbides; and/or
the nitride source materials comprise any one or more of the following: silicon nitrides, titanium nitrides, boron nitrides, zirconium nitrides, hafnium nitrides, niobium nitrides, tantalum nitrides, vanadium nitrides, ytterbium nitrides, and yttrium nitrides; and/or
the boride source materials comprise any one or more of the following: silicon borides, titanium borides, zirconium borides, hafnium borides, niobium borides, tantalum borides, vanadium borides, ytterbium borides, and yttrium borides.

12. The method of any preceding claim, wherein the at least one structural support comprises a foam-like material.

13. The method of any preceding claim, wherein the at least one metalloid comprises silicon, the at least one metalloid alloy comprises a silicon-containing alloy, and the melt-infiltration step further comprises forming a reaction product comprising at least one uniformly distributed particulate material comprising any one or more of the following: carbides, silicides, nitrides, borides and residual free silicon.

14. A gas turbine engine component comprising a melt-infiltrated CMC material fabricated according to the method of any preceding claim, comprising the steps of:
providing at least one preform of at least one fiber reinforcement;
infiltrating the at least one preform with at least one slurry comprising at least one particulate material and at least one solvent to form at least one slurry infiltrated preform comprising at least one particulate material;
freezing the at least one slurry infiltrated preform comprising the at least one particulate material to form at least one frozen slurry infiltrated preform comprising the at least one particulate material;
sublimating the at least one frozen slurry infiltrated preform comprising the at least one particulate material to form at least one structural support comprising the at least one particulate material uniformly distributed thereupon within at least one sublimated slurry infiltrated preform;
melt-infiltrating with at least one metal, at least one metalloid, at least one metal alloy, or at least one metalloid alloy, the at least one sublimated slurry infiltrated preform comprising the at least one structural support to form at least one melt-infiltrated CMC material; and
forming at least one gas turbine engine component comprising the at least one melt-infiltrated CMC material.

15. A melt-infiltrated CMC material fabricated according to the method of any of claims 1 to 13, comprising the steps of:
providing at least one preform of at least one fiber reinforcement;
infiltrating the at least one preform with at least one slurry comprising at least one particulate material and at least one solvent to form at least one slurry infiltrated preform comprising at least one particulate material;
freezing the at least one slurry infiltrated preform comprising the at least one particulate material to form at least one frozen slurry infiltrated preform comprising the at least one particulate material;
sublimating the at least one frozen slurry infiltrated preform comprising the at least one particulate material to form at least one structural support comprising the at least one particulate material uniformly distributed thereupon within at least one sublimated slurry infiltrated preform; and
melt-infiltrating with at least one metal, at least one metalloid, at least one metal alloy, or at least one metalloid alloy, the at least one sublimated slurry infiltrated preform comprising the at least one structural support to form at least one melt-infiltrated CMC material.
